# EUROPEAN PATENT APPLICATION

(11) **EP 4 564 130 A1**
(43) Date of publication of application: **04.06.2025**
(21) Application number: 22953094.4
(22) Date of filing: 27.07.2022
(51) Int. Cl.: G06F 1/3234

(54) **ACCELERATOR STATE CONTROL DEVICE, ACCELERATOR STATE CONTROL SYSTEM, ACCELERATOR STATE CONTROL METHOD, AND PROGRAM**

(71) Applicant: NIPPON TELEGRAPH AND TELEPHONE CORPORATION, Chiyoda-ku, Tokyo 100-8116 (JP)
(72) Inventor: SAITO, Shogo, Musashino-shi, Tokyo 180-8585 (JP); HARASAWA, Hikaru, Musashino-shi, Tokyo 180-8585 (JP); FUJIMOTO, Kei, Musashino-shi, Tokyo 180-8585 (JP)
(74) Representative: Dehns
(86) International application number: PCT/JP2022/029036
(87) International publication number: WO 2024/024001

(57) **Abstract**

An accelerator state control device (100) includes: an input amount acquisition/prediction unit (110) that predicts amount of processing to be offloaded to an accelerator (12) and outputs a prediction result as a traffic and a variation range of the traffic; a computing power setup recording unit (150) that maintains information on a type and a model of the accelerator and setup information tailored to performance, as a list, and retrieves information from the list in response to an inquiry and responds to the inquiry; an ACC computing power/consumed electricity setup determination unit (120) that determines setup information on computing power and varying time of the accelerator, based on the traffic and the variation range as well as the list; and an ACC computing power/consumed electricity setting unit (130) that applies the setup information to the accelerator (12), based on the setup information for the accelerator (12) determined by the ACC computing power/consumed electricity setup determination unit (120).

## Description

### TECHNICAL FIELD

The present invention relates to an accelerator state control device, an accelerator state control system, an accelerator state control method, and a program.

### BACKGROUND ART

Workloads of specialty (having high throughput therefor) are different depending on types of processors. Central processing units (CPUs) are versatile but are not good at (have low throughput for) a highly parallelized workload, whereas accelerators (hereinafter, appropriately referred to as ACCs), such as a field programmable gate array (FPGA) / (hereinafter, "/" denotes "or") a graphics processing unit (GPU) /an application specific integrated circuit (ASIC), can compute the workload at high speed with high efficiency. Offloading techniques have been increasingly utilized in which these different types of processors are combined and the workload, at which the CPUs are not good, are offloaded to the ACCs and computed, to improve overall computing time and computing efficiency.

In a virtual radio access network (vRAN) or the like, when performance is insufficient and requirements are not satisfied only with a CPU, part of computing is offloaded to an accelerator capable of computing at high speed such as an FPGA and a GPU. Particular workloads offloaded to the ACCs include encoding/decoding (forward error correction (FEC)) in the vRAN, audio and video media processing, and encryption/decryption processing.

A computer system may have a configuration such that hardware (CPU) for general-purpose computing and hardware (accelerator) specialized for a specific computing are mounted on a computer (hereinafter, an accelerator-equipped server), and part of computing is offloaded from a general-purpose processor, on which software runs, to the accelerator.

In addition, with the progress of cloud computing, it is becoming more common to offload part of processing, which requires a large amount of computing, from a client machine deployed at a user site to a server at a remote site (such as a data center located in the vicinity of a user) via a network (NW), to simplify the configuration of the client machine.

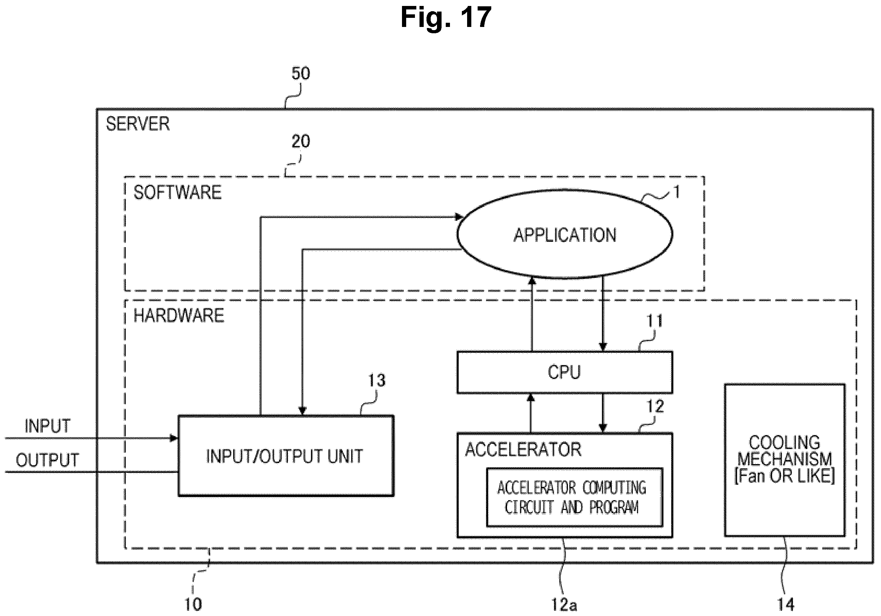

Fig. 17 is a diagram illustrating a computer system. As illustrated in Fig. 17, a server 50 is equipped with hardware 10 including a CPU 11, an accelerator 12 with an accelerator computing circuit and program 12a, an input/output unit 13, and a cooling mechanism (Fan and/or the like) 14; and software 20 including an application (hereinafter, referred to as APL as appropriate) 1 to run on the CPU 11 of the server 50. Note that the cooling mechanism (Fan and/or the like) 14 is mounted on the hardware 10 in Fig. 17, but may be mounted on hardware different from the hardware 10.

The server 50 receives input data from the outside, executes computing inside the server, and then outputs the data to the outside.

The application 1 calls a function group (API) defined as a standard, to offload part of computing to the accelerator 12.

The accelerator 12 is a computational accelerator device such as an FPGA and GPU. The accelerator 12 has the accelerator computing circuit and program 12a, and uses the accelerator computing circuit and program 12a to execute computing. Note that the accelerator 12 fails with a fixed probability due to failure of a cooling fan or the like. The input/output unit 13 receives input data and outputs a result.

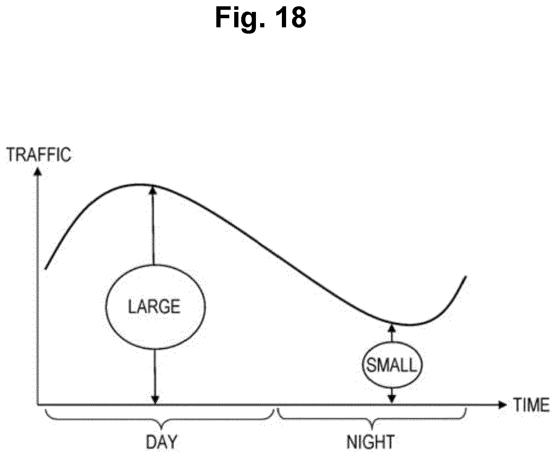

Fig. 18 is a chart illustrating variation in traffic of input data to the input/output unit 13 of the server 50. As illustrated in Fig. 18, the traffic of input data varies in time. For example, urban traffic in a radio access network (RAN) is large during the day and small at night.

Requirements for the server 50 are as follows to minimize consumed electricity related to the accelerator 12 computing and being cooled while maintaining responsiveness to input data within a certain period of time,
Requirement 1: [Electricity efficiency] The server 50 has its consumed electricity necessary for the accelerator 12 computing the input data thereto and being cooled minimized.
Requirement 2: [Responsiveness] The server 50 completes processing for the input data within a certain period of time since the data has been inputted.
Requirement 3: [Supporting various accelerators] The server 50 is capable of supporting various accelerators such as an FPGA, an ASIC, and a GPU.

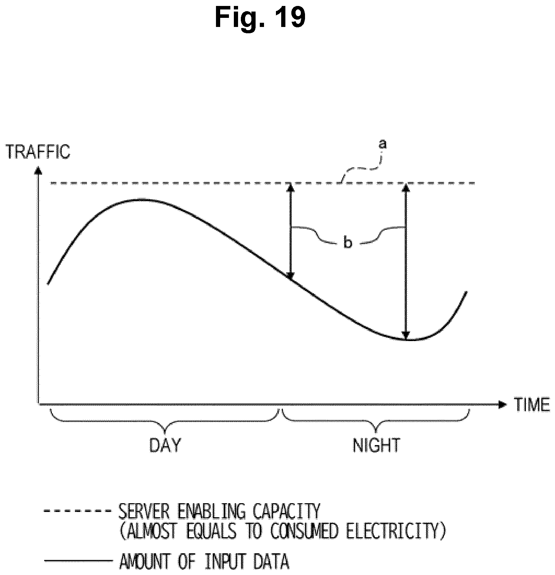

Fig. 19 is a chart illustrating the computing power and redundancy of the server due to variation in traffic of input data. A solid line in Fig. 19 indicates traffic of input data, and a broken line in Fig. 19 indicates server enabling capacity (almost equals to consumed electricity). As indicated by the broken line in Fig. 19, the computing power and consumed electricity of the server are constant. Therefore, as indicated by the solid line in Fig. 19, there is redundancy due to variation in traffic for the computing power of the server. Especially, traffic is small at night, to have excessive server enabling capacity (almost equals to consumed electricity), resulting in electricity inefficiency.

For accelerator-equipped servers, there are one or more conventional techniques, by accelerator type, to implement high responsiveness and high electricity efficiency for certain amount of computing.

### <Existing Technique 1: Electricity saving circuit design technique tailored to specific traffic>

Non-Patent Literature 1 describes a technique of optimizing a scale of basic circuit by specific computing amount and model, when designing an FPGA or ASIC circuit, to a minimum scale, to minimize electricity consumed by ACCs.

### <Existing Technique 2: Changing balance between computing power and consumed electricity amount due to change in clock rate>

Non-Patent Literature 2 describes a technique of changing balance between performance and amount of consumed electricity (to transition at a constant value after the setting) due to change in clock rate.

### <Existing Technique 3: Setting output from cooling mechanism necessary for stable operation of accelerator>

Non-Patent Literature 3 describes a configuration to drive a fan always at a maximum power in order to allow ACCs to stably compute regardless of specification of computing circuit.

### PRIOR ART LITERATURE

### Non-Patent Literature

Non Patent Literature 1: "Power-aware FPGA Design White Paper", [online] [searched on July 6, 2022], the Internet URL:https://www.microsemi.com/document-portal/doc download/131579-power-aware-fpga-design-white-paper;
Non-Patent Literature 2: "Guide on Command to change Clock setting of FPGA" (Intel OPAE Tool kit", [online] [searched on July 6, 2022], the Internet URL:https://opae.github.io/latest/docs/fpga tools/userclk/u serclk.html; and
Non-Patent Literature 3: "Intel N3000 Server Setup Guide", [online] [searched on July 6, 2022], the Internet URL:https://jp.fujitsu.com/platform/server/primergy/product s/note/svsdvd/dvd/pdf/intelpac n3000-qsg-1.1-jp.pdf.

### SUMMARY OF THE INVENTION

### Problems to be solved

The existing techniques described in Non-Patent Literatures 1 to 3 allows for implementing a configuration maintaining responsiveness and having high electricity efficiency, by preparing and setting a setup, corresponding to certain amount of computing, for each accelerator. However, there is a problem that such a configuration has redundant computing power and overconsumed electricity when an input amount varies in time, and thus cannot fulfill "Requirement 1: [Electricity efficiency]," "Requirement 2: [Responsiveness]," and "Requirement 3: [Supporting various accelerators]" all together for varying traffic.

The present invention has been devised in view of such a background, and is intended to achieve high electricity efficiency of various accelerators for varying amount of input data, while securing responsiveness. Solution to Problem

In order to solve the above problem, the present invention provides an accelerator state control device to control states of an accelerator when specific processing of an application is offloaded to, and computed by, the accelerator, the device including: a prediction unit that predicts variation in amount of input data, based on the acquired amount of input data and outputs a prediction result as a traffic and a variation range of the traffic; a computing power setup recording unit that maintains information on a type and a model of the accelerator and setup information tailored to performance as a list, and retrieves information from the list in response to an inquiry and responds to the inquiry; a determination unit that determines setup information on computing power and varying time of the accelerator, based on the traffic and the variation range of the traffic outputted from the prediction unit and the list retrieved from the computing power setup recording unit; and a setting unit that applies the setup information to the accelerator, based on the setup information for the accelerator determined by the determination unit.

### Advantageous Effects of Invention

The present invention achieves high electricity efficiency of various accelerators for varying amount of input data, while securing responsiveness.

### BRIEF DESCRIPTION OF DRAWINGS

Fig. 1 shows a schematic configuration of an accelerator state control system according to an embodiment of the present invention;
Fig. 2 shows a schematic configuration of a variation in arranging an accelerator state control device in the accelerator state control system according to the embodiment of the present invention;
Fig. 3 shows a table of listing information on means of reducing electricity of the accelerator state control device in the accelerator state control system according to the embodiment of the present invention;
Fig. 4 shows a table of example computing-power-based circuit information maintained by an ACC computing-power-based circuit information recording unit of the accelerator state control device in the accelerator state control system according to the embodiment of the present invention;
Fig. 5 shows a performance determination table, based on traffic, maintained by the ACC computing-power-based circuit information recording unit of the accelerator state control device in the accelerator state control system according to the embodiment of the present invention;
Fig. 6 shows an equipped accelerator management table maintained by the ACC computing-power-based circuit information recording unit of the accelerator state control device in the accelerator state control system according to the embodiment of the present invention;
Fig. 7 shows an accelerator list management table maintained by the ACC computing-power-based circuit information recording unit of the accelerator state control device in the accelerator state control system according to the embodiment of the present invention;
Fig. 8 shows an accelerator type management table maintained by the ACC computing-power-based circuit information recording unit of the accelerator state control device in the accelerator state control system according to the embodiment of the present invention;
Fig. 9 is a flowchart of <Operation Sequence 1> in a case where the electricity saving control starts with Function 1 of predicting input amount, by the accelerator state control device in the accelerator state control system according to the embodiment of the present invention;
Fig. 10 is a flowchart of <Operation Sequence 2> in a case where the electricity saving control starts with periodic activation by the accelerator state control device in the accelerator state control system according to the embodiment of the present invention;
Fig. 11 shows a table of listing detailed information on means of reducing electricity of the accelerator state control device in the accelerator state control system according to the embodiment of the present invention;
Fig. 12A is a flowchart of an example sequence of setting a means of reducing electricity by the accelerator state control device in the accelerator state control system according to the embodiment of the present invention;
Fig. 12B is a continuation of the flowchart of the example sequence of setting a means of reducing electricity by the accelerator state control device in the accelerator state control system according to the embodiment of the present invention;
Fig. 12C is a further continuation of the flowchart of the example sequence of setting a means of reducing electricity by the accelerator state control device in the accelerator state control system according to the embodiment of the present invention;
Fig. 13 is a flowchart of Operational Sequence 1 of a Look-Aside-type accelerator state control device in the accelerator state control system according to the embodiment of the present invention;
Fig. 14 is a flowchart of Operational Sequence 1 of an Inline-type accelerator state control device in the accelerator state control system according to the embodiment of the present invention;
Fig. 15 is a chart illustrating computing power and consumed electricity, and redundancy achieved by the accelerator state control device in the accelerator state control system according to the embodiment of the present invention;
Fig. 16 shows a hardware configuration of an example computer to implement functions of the accelerator state control device in the accelerator state control system according to the embodiment of the present invention;
Fig. 17 is a diagram illustrating a computer system;
Fig. 18 is a chart illustrating variation in traffic of input data to an input/output unit of a server; and
Fig. 19 is a chart illustrating computing power and redundancy of the server due to variation in traffic of input data.

### DESCRIPTION OF EMBODIMENTS

### Embodiment

### [Overview]

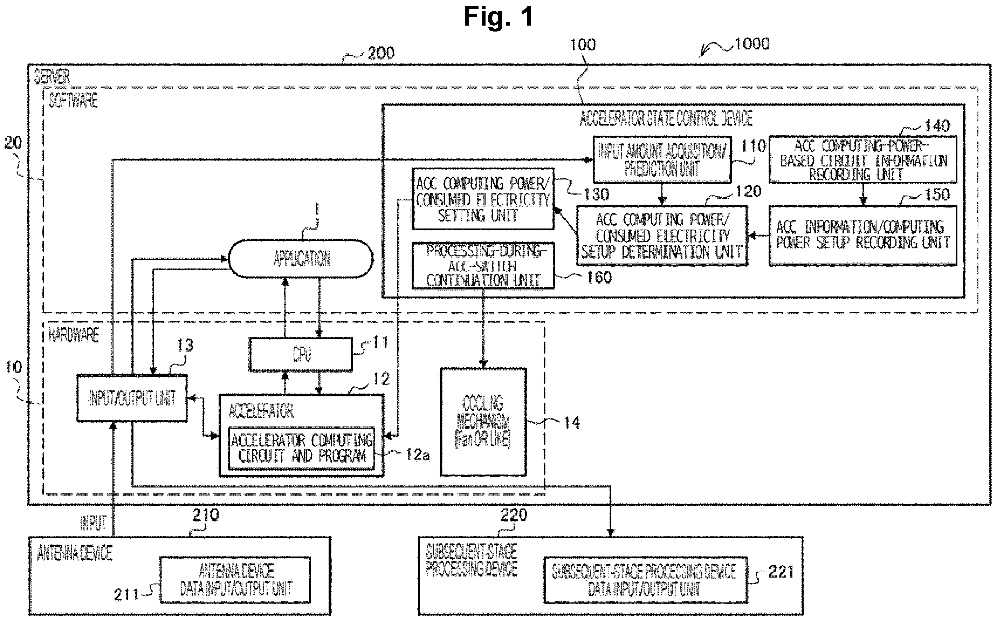

Hereinafter, a description is given of an accelerator state control system and the like with a mode of implementing the present invention (hereinbelow, referred to as "the present embodiment"), with reference to the drawings. Fig. 1 shows a schematic configuration of an accelerator state control system according to an embodiment of the present invention. As illustrated in Fig. 1, an accelerator state control system 1000 includes a server 200, an antenna device 210, and a subsequent-stage processing device 220. In addition, the accelerator state control system 1000 includes: an accelerator state control device 100 that controls the state of the accelerator 12 when specific processing of the application 1 is offloaded to, and computed by, the accelerator 12; and the cooling mechanism 14 that cools computing devices including the accelerator 12.

### [Server 200]

The server 200 is a Distributed Unit for processing 5G signals. The server 200 includes hardware (HW) 10 and software 20.

### <<Hardware 10>>

The hardware 10 includes the central processing unit (CPU) 11, the accelerator 12, the input/output unit 13, and the cooling mechanism (Fan and/or the like) 14.

### <CPU 11>

The CPU 11 executes processing of the application 1 and executes software in functional units of the server 200.

### <Accelerator 12>

The accelerator 12 is a computing acceleration device such as an FPGA and GPU. The accelerator 12 is a computing unit mounted on the server 200 and specialized for specific computing. Forms of accelerators connected with the CPU 11 via a bus include an ASIC-equipped accelerator, an FPGA-equipped accelerator, and a GPU.

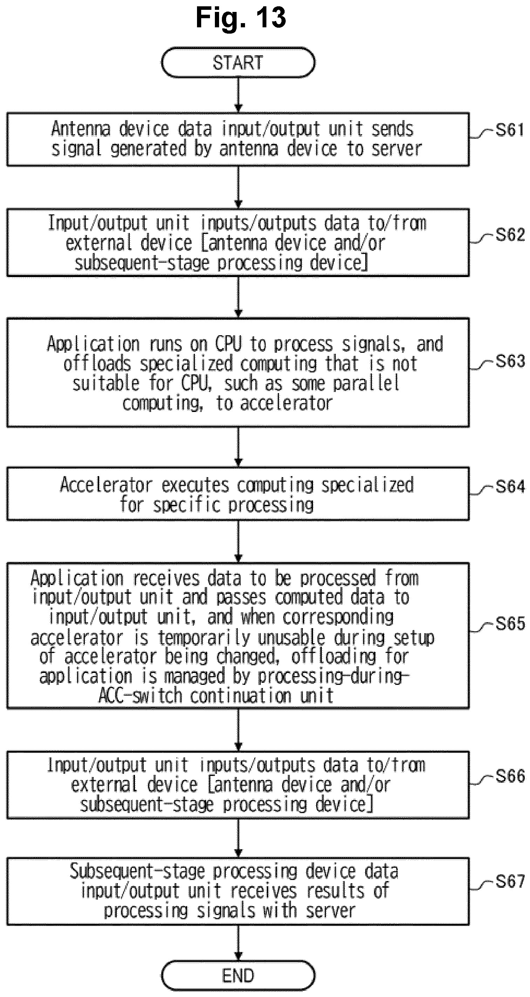

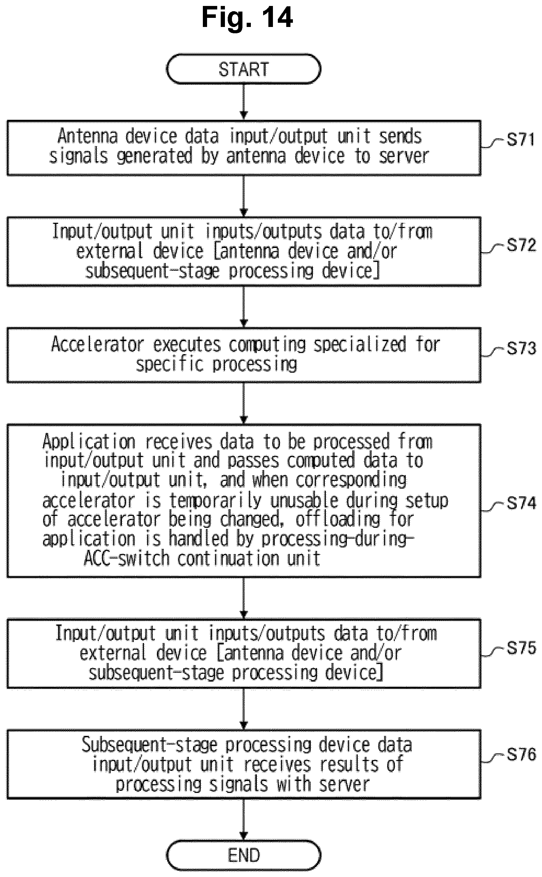

Data to be processed by the accelerator 12 may be inputted from the CPU 11 as a Look-Aside mode (Sequence 1 in Fig. 13), or directly from the input/output unit 13, such as an NIC, as an In-Line mode (Sequence 2 in Fig. 14). An arrowed signal line in Fig. 1 directed from the CPU 11 to the accelerator 12 exists in a mode of Look-Aside-type ACC offloading shown in Sequence 1 in Fig. 13. In addition, a bidirectional signal line in Fig. 1 connecting the input/output unit 13 with the accelerator 12 exists in a mode of In-Line-type ACC offloading shown in Sequence 2 in Fig. 14.

The accelerator 12 includes the accelerator computing circuit and program 12a. The accelerator computing circuit and program 12a is circuit information or a program to be loaded into the accelerator 12. The accelerator computing circuit and program 12a indicates FPGA circuit information when the accelerator 12 is an FPGA, and indicates a program for a GPU when the accelerator 12 is a GPU. Note that the accelerator 12 fails with a fixed probability due to failure of the cooling mechanism (Fan and/or the like) 14 or the like.

### <Input/Output Unit 13>

The input/output unit 13 is an input/output mechanism such as a network interface card (NIC), and inputs/outputs data from/to an external device (the antenna device 210 and/or the subsequent-stage processing device 220). In addition, the input/output unit 13 has an interface that notifies the application 1 of current data input amount.

### <Cooling Mechanism 14>

The cooling mechanism 14 is a mechanism that cools the entire computing devices (the CPU 11 and the accelerator 12) of the server 200. The cooling mechanism 14 can change cooling performance, and consumed electricity changes accordingly. The cooling mechanism 14 receives setting of cooling performance as an input.

The cooling mechanism 14 is a mechanism that collectively cools the entire server such as of the CPU and the accelerator, but may be an independent cooling mechanism that cools only the CPU or only the accelerator.

### <<Software 20>>

The software 20 includes the application 1 and the accelerator state control device 100 that controls the state of the accelerator.

### <Application 1>

The application 1 is a program that processes signals and runs on the CPU 11. Specialized computing that is not suitable for the CPU, such as some parallel computing, is offloaded to the accelerator 12. For example, the application 1 calls a function group (API) defined as a standard, to offload partial computing to the accelerator 12. Here, when the corresponding accelerator is temporarily unusable during the configuration of the accelerator is being changed, the offloading is directed to a processing-during-ACC-switch continuation unit 160.

The application 1 receives data to be processed, as an input, from the input/output unit 13. As an output, the computed data is passed to the input/output unit 13.

### [Accelerator State Control Device 100]

The accelerator state control device 100 includes an input amount acquisition/prediction unit 110 (prediction unit, prediction procedure), an ACC computing power/consumed electricity setup determination unit 120 (determination unit, determination procedure), an ACC computing power/consumed electricity setting unit 130 (setting unit, setting procedure), an ACC computing-power-based circuit information recording unit 140, an ACC information/computing power setup recording unit 150 (computing power setup recording unit, computing power setup recording procedure), and the processing-during-ACC-switch continuation unit 160 (processing continuation unit).

### <Input Amount Acquisition/Prediction Unit 110>

The input amount acquisition/prediction unit 110 predicts computing amount to be offloaded to the accelerator, and outputs a prediction result as traffic and its range in variation. The present embodiment predicts variation in amount of input data as one aspect for predicting (estimating) the amount of computing to be offloaded to the accelerator. Anything may be used as long as the amount of computing to be offloaded to the accelerator can be predicted (estimated).

The input amount acquisition/prediction unit 110 predicts variation in amount of input data amount, based on the acquired amount of input data, and outputs a prediction result as the traffic and its range in variation. Specifically, the input amount acquisition/prediction unit 110 acquires amount of input data to the server and predicts variation in amount of subsequent input data. The input amount acquisition/prediction unit 110 receives amount of input data to the server, as an input, and outputs traffic after a certain period of time and a unit of time in variation, as a result of predicting amount of subsequent data, as an output.

### (Case 1 of prediction function)

It is conceivable to predict variation in a traffic in future on the basis of variation in a traffic in the past. For example, let's assume to determine whether or not the traffic tends to increase based on the traffic acquired five times in the past at a constant cycle. The traffic at five times is linearly approximated, and is presumed increasing when the obtained inclination is equal to or more than a certain value, while is presumed decreasing when the obtained inclination is less than the certain value, to predict traffic after a certain period of time. Further, the unit of time in variation is outputted based on dispersion of the traffic. Specifically, variation "in seconds" is outputted because the traffic is assumed to vary in a short time when the dispersion is large, while variation "in minutes" is outputted when the dispersion is small.

### (Case 2 of prediction function)

Instead, the traffic may be predicted such that the traffic to the device by time of day by day of week is recorded and used for the prediction. For example, the traffic in a radio access network of mobile phones has different time transition by location. For example, the traffic is large in daytime but small at night in an urban area. As another example, the traffic at hours other than the time when trains are in operation is extremely small in an area along the corresponding railroad. The traffic by time of day may be predicted using such results. Note that, in a case where the means of Case 2 of prediction function is used, the unit of time in variation of the traffic is long and could be "in minutes or hours".

For predicting the traffic, another factor may be used to determine the traffic to a corresponding server device. For example, regarding the traffic in a radio access network of mobile phones to a device connected to an antenna device close to the place where people densely gather outdoors, the amount of people varies depending on the weather, and the traffic varies accordingly. In such a use case, variation in traffic may be predicted on the basis of results of weather prediction. Note that, in a case where this means is used, the unit of time in variation of the traffic is long and could be "in minutes or hours".

### (Function of predicting size of input data)

A function of predicting the size of input data may be estimated from other factors in addition to estimating from time of day. For example, the information source may include variation in traffic due to weather or one or more events stored in a RAN Intelligent Controller (RIC) in a radio access network (RAN).

### (Examples of chronological variation in amount of input data)

In vRAN, an amount of input data to a server depends on the number of mobile phone terminals and amount of communication in an area covered by the server. The number of mobile phone terminals and amount of communication depend on movement of people, so that the amount of communication increases during time of day when people gather and in an area where people gather, but decreases during time of day when people does not gather and in an area where people does not gather. For example, in an urban office area, the traffic is large during daytime on weekdays, but the traffic is small during nighttime or on holidays. In addition, in a suburban residential area, the traffic on holidays is larger than that during daytime on weekdays.

### <ACC Computing Power/Consumed Electricity Setup Determination Unit 120>

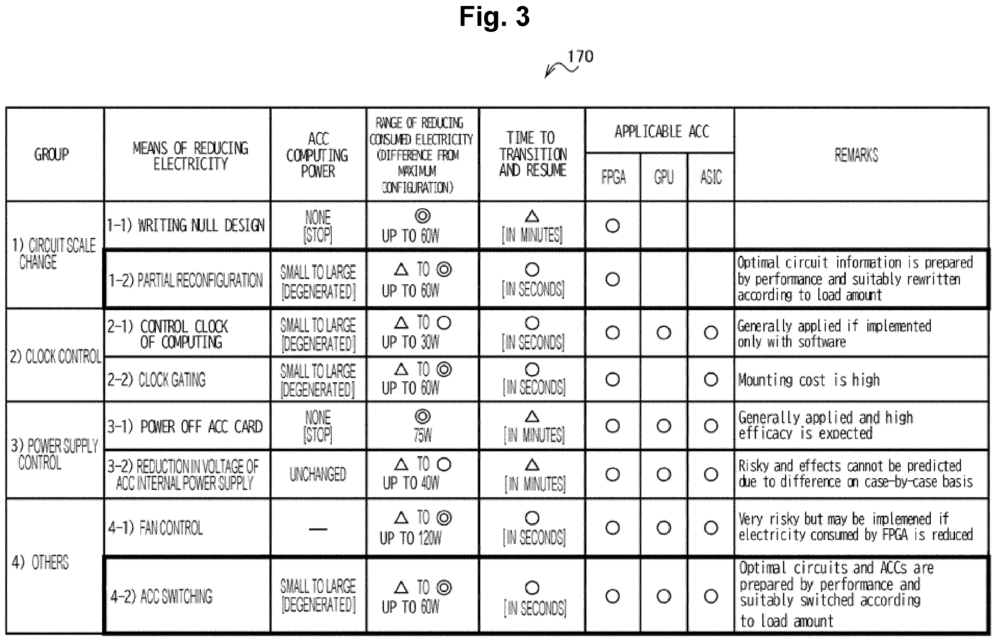

The ACC computing power/consumed electricity setup determination unit 120 determines setup of the computing power and varying time of the accelerator, based on the traffic and its variation range outputted from the input amount acquisition/prediction unit 110 and the list information (Fig. 3) retrieved from the ACC information/computing power setup recording unit 150.

Specifically, the ACC computing power/consumed electricity setup determination unit 120 determines setup of the computing power and varying time of the accelerator according to the results of predicting the traffic and the assumed variation range outputted from the input amount acquisition/prediction unit 110. The ACC computing power/consumed electricity setup determination unit 120 inputs the traffic to the ACC information/computing power setup recording unit 150, and acquires the list (Fig. 3) of applicable accelerators and setups. The setup of the accelerator suitable for the computing power and varying time and the setup of the cooling mechanism 14 are selected from the list information on the setups, and notified to the ACC computing power/consumed electricity setup setting unit 130. The ACC computing power/consumed electricity setup determination unit 120 receives the predicted traffic and its range in variation from the input amount acquisition/prediction unit 110 as an input. The ACC computing power/consumed electricity setup determination unit 120 passes setup information for the ACC to the ACC computing power/consumed electricity setting unit 130 as an output.

### <ACC Computing Power/Consumed Electricity Setting Unit 130>

The ACC computing power/consumed electricity setting unit 130 applies the setup information for the accelerator 12, based on the setup information determined by the ACC computing power/consumed electricity setup determination unit 120 to the accelerator 12.

Specifically, the ACC computing power/consumed electricity setting unit 130 applies the inputted setup for the accelerator 12 and the inputted setup for the cooling mechanism 14, to the accelerator 12 and the cooling mechanism 14, respectively. The ACC computing power/consumed electricity setting unit 130 receives, as an input, setup information for the accelerator 12 and setup information for the cooling mechanism 14 from the ACC computing power/consumed electricity setup determination unit 120. The ACC computing power/consumed electricity setting unit 130 applies the setup information to the accelerator 12 and the cooling mechanism 14, as an output.

In addition, the ACC computing power/consumed electricity setting unit 130 applies the setup information commonly to every type of accelerator through changing the frequency and/or turning off the electric source, and applies the setup information through rewriting the circuit to an FPGA and through sleeping to a GPU.

### <ACC Computing-power-based Circuit Information Recording Unit 140>

The ACC computing-power-based circuit information recording unit 140 maintains circuit information of the FPGA tailored to performance, by FPGA type, and FPGA type information, and returns circuit information of the FPGA and the FPGA type information in response to an inquiry. In this case, the ACC computing-power-based circuit information recording unit 140 responds to the ACC computing power/consumed electricity setup determination unit 120 via the ACC information/computing power setup recording unit 150 or directly.

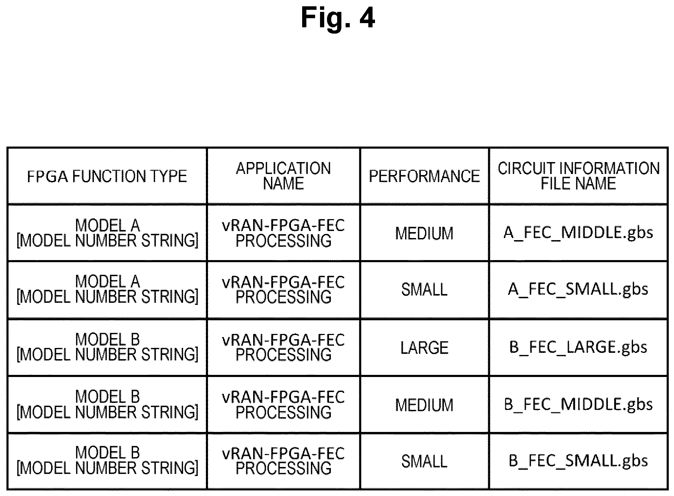

The ACC computing-power-based circuit information recording unit 140 maintains circuit information of FPGAs tailored to performance, by FPGA type, and delivers circuit information of the FPGA in response to an inquiry. This inquiry includes information on an FPGA type (Fig. 4). The ACC computing-power-based circuit information recording unit 140 receives, as an input, information on a model of FPGA from the ACC information/computing power setup recording unit 150. The ACC computing-power-based circuit information recording unit 140 returns, as an output, information of the FPGA circuits to the ACC information/computing power setup recording unit 150.

The inquiry may additionally include "necessary performance" to allow the ACC computing-power-based circuit information recording unit 140 to return only one piece of information of optimal FPGA circuit, based on this information, to the inquiry. The returned information of the FPGA circuit may be an identifier that can uniquely identify circuit information, such as a file path and a pointer, to access the information, instead of very actual data of the circuit information of the FPGA.

### <ACC Information/Computing Power Setup Recording Unit 150>

The ACC information/computing power setup recording unit 150 maintains information on accelerators by type and by model and setup information tailored to performance as a list 170 (Fig. 3), and retrieves information from the list 170 in response to an inquiry and responds to the inquiry. Here, the information on accelerators by type and by model is information on accelerators maintained by the host mounted with accelerators so as to be used.

The ACC information/computing power setup recording unit 150 receives, as an input, an accelerator type and model, and an application name from the ACC computing power/consumed electricity setup determination unit 120. The ACC information/computing power setup recording unit 150 returns, as an output, a list of setting means applicable to the corresponding accelerator to the ACC computing power/consumed electricity setup determination unit 120. In addition, when the inputted accelerator type is an FPGA, the ACC information/computing power setup recording unit 150 makes an inquiry to the ACC computing-power-based circuit information recording unit 140 based on the model information, and acquires a list of circuit information of the suitable FPGA.

### <Processing-During-ACC-switch Continuation Unit 160>

When the computing function of the accelerator 12 is temporarily stopped as the ACC computing power/consumed electricity setting unit 130 has been setting the setup information, the processing-during-ACC-switch continuation unit 160 temporarily causes the CPU 11 or another accelerator to continue computing, in order to continue service. This function unit is enabled when computing with the corresponding accelerator 12 is temporarily stopped during the setup of the accelerator 12 being changed. When the present functional unit is enabled, the processing-during-ACC-switch continuation unit 160 receives offloading of computing for the application 1 with the present functional unit and uses a computing resource other than one with its setup having been changed.

Note that another accelerator may be temporarily used in addition to the CPU, to continue the computing.

### [Antenna Device 210]

The antenna device 210 is an antenna and a transmission/reception unit that wirelessly communicate with a terminal (user equipment (UE)) (hereinafter, the "antenna device" collectively refers to an antenna, a transmission/reception unit, and a power supply unit for the two). The transmission/reception unit is connected to a signal processing device (server 200) at a base band unit (BBU) such as by a dedicated cable.

The antenna device 210 includes an antenna device data input/output unit 211. The antenna device data input/output unit 211 is a functional unit that sends a signal generated by the antenna device 210 to the server 200, and is implemented in the form of an NIC or the like.

### [Subsequent-Stage Processing Device 220]

The subsequent-stage processing device 220 is a centralized unit in 5G signal processing. The subsequent-stage processing device 220 includes a subsequent-stage processing device data input/output unit 221. The subsequent-stage processing device data input/output unit 221 is a functional unit that receives results of processing signals with the server 200, and is implemented in the form of an NIC or the like.

### Other Embodiments

In the present embodiment, the input/output unit 13, the CPU 11, and the accelerator 12 are configured to be separated hardware, but may be in a form of dedicated hardware in which the CPU 11, the accelerator 12, and the accelerator computing circuit and program 12a are integrated. In other words, in place of a form of applying a so-called Look-Aside-type accelerator to "explicitly offload computing data obtained via the input/output unit 13, such as an NIC, from the CPU 11 to the accelerator 12" as illustrated in Fig. 1, a form of applying a so-called In-line accelerator to "complete computing in a single hardware having the NIC, the accelerator, and the CPU integrated as one component, after data has been received by the NIC" may be used. In addition, the CPU 11 and the accelerator 12 may be mounted in a single chip as in a form of a System on Chip (SoC).

### [Arrangement of Accelerator State Control Device]

A description is given of variation in arranging the accelerator state control device in the accelerator state control system. The accelerator state control system 1000 in Fig. 1 is a case where the accelerator state control device 100 is arranged in the software 20 of the server 200. A part of the function of the accelerator state control device 100 can be installed as a separate body outside the server 200, and such a case is described below.

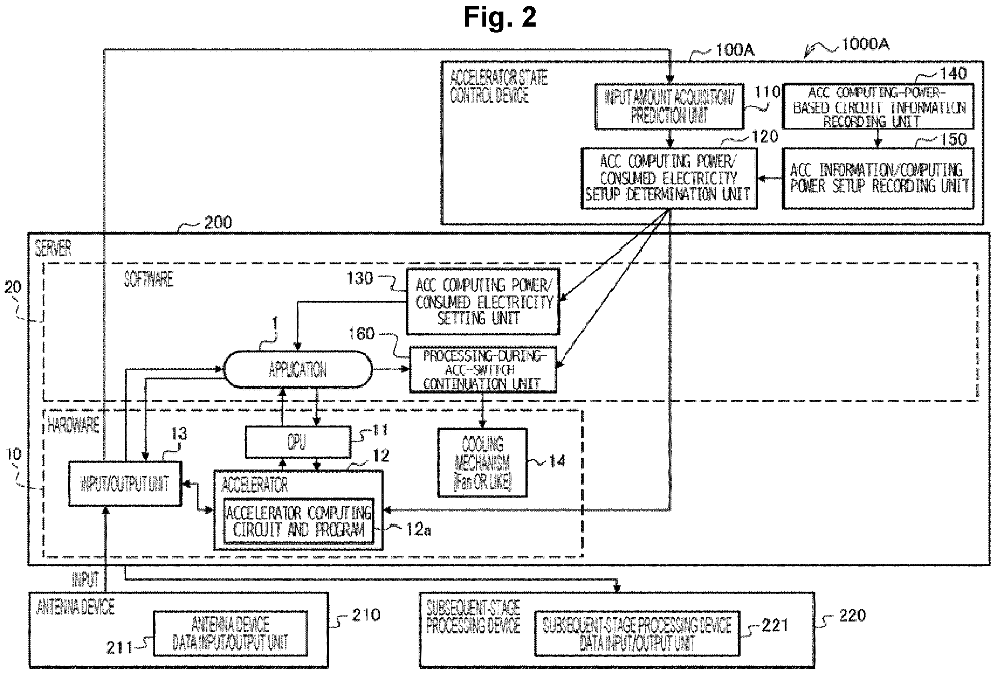

Fig. 2 shows a schematic configuration of a variation in arranging the accelerator state control device in the accelerator state control system. Note that the same components in the drawings described below as those in Fig. 1 are denoted by the same reference numerals, and duplicate descriptions thereof are skipped. A variation illustrated in Fig. 2 is a case where a controller function unit including the input amount acquisition/prediction unit 110, ACC computing power/consumed electricity setup determination unit 120, ACC computing-power-based circuit information recording unit 140, and ACC information/computing power setup recording unit 150 is provided as a separate body. As illustrated in Fig. 2, an accelerator state control system 1000A includes an accelerator state control device 100A installed as a separate body outside the server 200. The software 20 of the server 200 includes the application 1, ACC computing power/consumed electricity setting unit 130, and processing-during-ACC-switch continuation unit 160. The accelerator state control device 100A has the controller function unit installed outside the server 200, yet has the same function as the accelerator state control device 100 in Fig. 1.

As described above, a form may be adopted as illustrated in Fig. 2 in which some or all of the functions of the accelerator state control device are independently deployed in another body outside the server 200, to deploy functions to a RAN Intelligent Controller (RIC) in a Radio Access Network (RAN).

In addition, arranging the controller function unit outside allows for predicting the input amount on the basis of the input amount acquisition (Function 1) from a plurality of server machines, to have an advantage that accuracy of predicting traffic of Function 1 is improved. For example, in a wireless system of mobile phones, when a traffic in an area to be processed by a certain server machine is increased, it is assumed that input amount in adjacent areas to be processed also varies after the increase.

In addition, a plurality of the servers 200 can be operated by one accelerator state control device. This reduces costs and improves maintainability of the accelerator state control device. Further, this eliminates or reduces changeovers at the server, and can be versatilely applied.

### [Data Structure of Accelerator]

A description is given of a list and characteristics of means of reducing electricity. Fig. 3 shows a table of listing information on means of reducing electricity. As illustrated in Fig. 3, the means of reducing electricity are grouped into 1) circuit scale change, 2) clock control, 3) power supply control, and 4) others. Then, the four groups are each described with means of reducing electricity, ACC computing power, range of reducing consumed electricity (difference from maximum configuration), time to transition and resume, applicable ACC, and remarks. The applicable ACC is divided into FPGA, GPU, and ASIC.

The above-described four groups are used for controlling computing power and consumed electricity of accelerators. The four groups of means of reducing electricity are different from each other on a range of variation in ACC computing power, a range of reducing consumed electricity, time to transition and resume, and applicable ACC. An accelerator state control method selects from among these options with respect to results of predicting a load and an accelerator to be controlled.

For example, with "partial reconfiguration" under "means of reducing electricity" of "group" 1) circuit scale change, the ACC computing power is "small to large (degenerated)", the range of reducing consumed electricity (difference from the maximum configuration) is "up to 60 W", the time to transition and resume is "in seconds" and the applicable ACC is "FPGA". This means has a characteristic that "Optimal circuit information is prepared by performance and suitably rewritten according to load amount".

With 4-2) of "ACC switching" under "means of reducing electricity" of "group" 4) others, the ACC computing power is "small to large (degenerated)", the range of reducing consumed electricity (difference from the maximum configuration) is "up to 60 W", time to transition and resume is "in seconds" and the applicable ACCs are "FPGA, GPU, and ASIC". This means has a characteristic that "Optimal circuits and ACCs are prepared by performance, and are suitably switched according to load amount".

### [Computing-Power-based Circuit Information]

Computing-power-based circuit information of the ACC computing-power-based circuit information recording unit 140 is described. Fig. 4 shows an example database of computing-power-based circuit information maintained by the ACC computing-power-based circuit information recording unit 140. As illustrated in Fig. 4, the computing-power-based circuit information includes an FPGA function type, an application name, performance, and a circuit information file name. The ACC computing-power-based circuit information recording unit 140 maintains circuit information of FPGAs tailored to performance (computing-power-based circuit information illustrated in Fig. 4) by FPGA type, and delivers circuit information of the FPGA in response to an inquiry (hereinbelow, " to deliver" means to retrieve and return information).

### [Computing Amount Estimation Table]

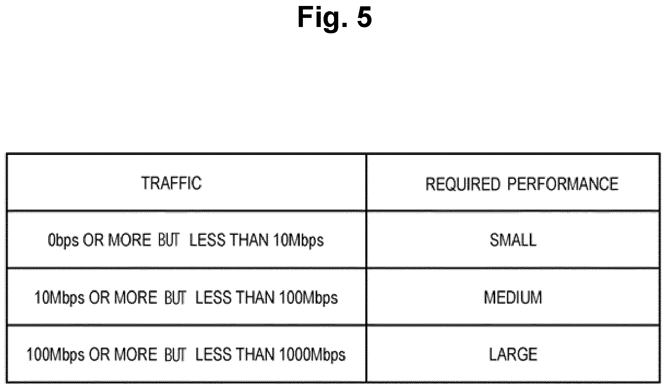

A description is given of a performance determination table (computing amount estimation table) based on the traffic maintained by the ACC computing-power-based circuit information recording unit 140. Fig. 5 shows a performance determination table (computing amount estimation table), based on the traffic maintained by the ACC computing-power-based circuit information recording unit 140. As illustrated in Fig. 5, the computing amount estimation table designates required performance, based on the traffic. For example, when the traffic is "0 bps or more but less than 10 Mbps", the required performance is "small".

### [Accelerator Equipment Relationship Management Table]

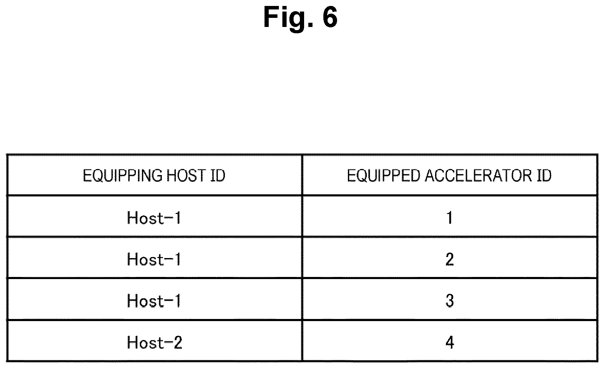

A description is given of an equipped accelerator management table maintained by the ACC computing-power-based circuit information recording unit 140. Fig. 6 shows an equipped accelerator management table maintained by the ACC computing-power-based circuit information recording unit 140. As illustrated in Fig. 6, the equipped accelerator management table stores a correspondence between an equipping host ID and an equipped accelerator ID. In the example in Fig. 6, equipping host Host-1 is equipped with equipped accelerator IDs "1", "2", and "3".

### [Accelerator List Management Table]

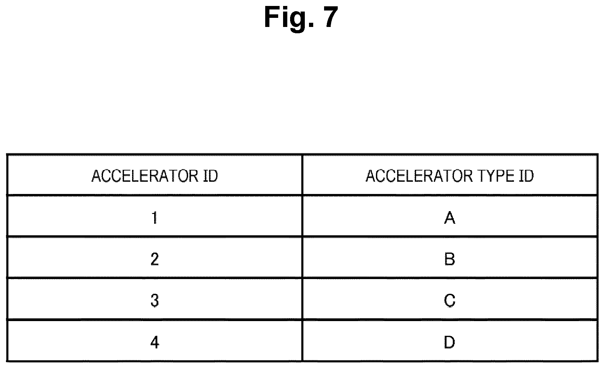

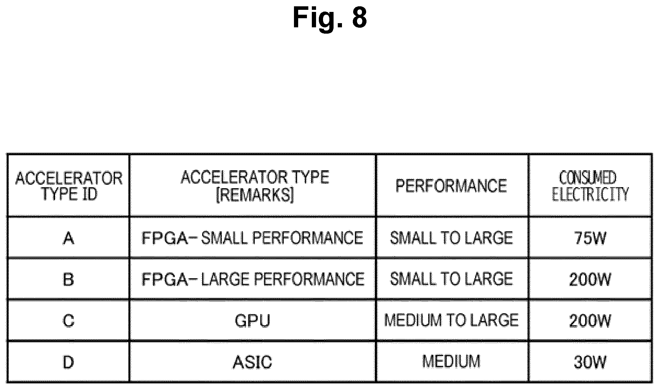

A description is given of an accelerator list management table maintained by the ACC computing-power-based circuit information recording unit 140. Fig. 7 shows an accelerator list management table maintained by the ACC computing-power-based circuit information recording unit 140. As illustrated in Fig. 7, the accelerator list management table stores a correspondence between an accelerator ID and an accelerator type ID. In the example in Fig. 7, accelerator ID "1" designates accelerator type ID "A", accelerator ID "2" designates accelerator type ID "B", accelerator ID "3" designates accelerator type ID "C", and accelerator ID "4" designates accelerator type ID "D". Specifically, accelerator type IDs "A" to "D" are shown in an accelerator type management table in Fig. 8 as described below.

### [Accelerator Type Management Table]

A description is given of the accelerator type management table maintained by the ACC computing-power-based circuit information recording unit 140. Fig. 8 shows the accelerator type management table maintained by the ACC computing-power-based circuit information recording unit 140. As illustrated in Fig. 8, the accelerator type management table stores an accelerator type (remarks), performance, and consumed electricity for each accelerator type ID. For example, accelerator type ID "A" has accelerator type of "FPGA - small performance", performance of "small to large", and consumed electricity of "75 W". Accelerator type ID "B" has accelerator type of "FPGA - large performance", performance of "small to large", and consumed electricity of "200 W". Therefore, when performance is focused in accelerator type of "FPGA", accelerator type ID "B" is selected. Alternatively, when the required performance is "medium to large", accelerator type of "GPU" with accelerator type ID "C" and accelerator type of "ASIC" with accelerator type ID "D" can be selected in addition to accelerator type of "FPGA". Note that items other than performance and consumed electricity (for example, application type) may be managed. For example, when the application executes parallel processing, accelerator type of "GPU" may be selected even when the consumed electricity is equivalent.

### [Operation Sequence 1]

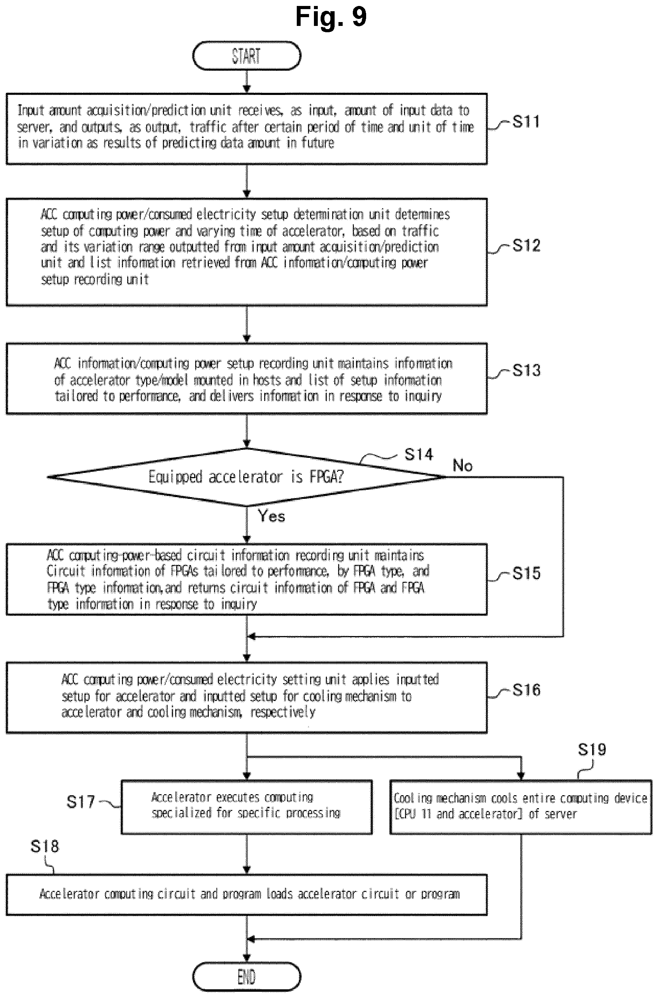

Hereinbelow, a description is given of operation of the accelerator state control system 1000 configured as described above. The operation sequence of the present embodiment is an electricity saving control sequence, and includes <Operation Sequence 1> in a case where the electricity saving control starts with Function 1 of predicting input amount and <Operation Sequence 2> in a case where the electricity saving control starts with periodic activation. These are described in sequence below. Fig. 9 is a flowchart of <Operation Sequence 1> in a case where the electricity saving control starts with Function 1 of predicting the input amount.

In step S11, the input amount acquisition/prediction unit 110 receives, as an input, amount of input data to the server, and outputs, as an output, traffic after a certain period of time and a unit of time in variation as results of predicting data amount in future.

In step S12, the ACC computing power/consumed electricity setup determination unit 120 determines setup of the computing power and varying time of the accelerator, based on the traffic and its variation range outputted from the input amount acquisition/prediction unit 110 and the list information (Fig. 3) retrieved from the ACC information/computing power setup recording unit 150.

In step S13, the ACC information/computing power setup recording unit 150 maintains the information of accelerator type/model mounted in the hosts and a list of setup information tailored to performance, and delivers the information in response to an inquiry. The ACC information/computing power setup recording unit 150 receives, as an input, an accelerator type and model, and an application name from the ACC computing power/consumed electricity setup determination unit 120. The ACC information/computing power setup recording unit 150 returns, as an output, a list of setting means applicable to the corresponding accelerator 12 to the ACC computing power/consumed electricity setup determination unit. In addition, when the inputted accelerator type is an FPGA, the ACC information/computing power setup recording unit 150 makes an inquiry to the ACC computing-power-based circuit information recording unit 140 based on the model information, and acquires a list of the corresponding circuit information of conforming FPGAs.

In step S14, the ACC computing power/consumed electricity setup determination unit 120 determines whether the equipped accelerator 12 is an FPGA. When the equipped accelerator 12 is not an FPGA (S14: No), the processing proceeds to step S16.

When the equipped accelerator 12 is an FPGA (S14: Yes), in step S15, the ACC computing-power-based circuit information recording unit 140 maintains the circuit information of FPGAs tailored to performance, by FPGA type, and the FPGA type information, and returns the circuit information of the FPGA and the FPGA type information in response to an inquiry. In this case, the ACC computing-power-based circuit information recording unit 140 responds to the ACC computing power/consumed electricity setup determination unit 120 via the ACC information/computing power setup recording unit 150 or directly.

In step S16, the ACC computing power/consumed electricity setting unit 130 applies the inputted setup for the accelerator 12 and the inputted setup for the cooling mechanism 14 to the accelerator 12 and the cooling mechanism 14, respectively. The ACC computing power/consumed electricity setting unit 130 receives, as an input, the setup information for the accelerator 12 and setup information for the cooling mechanism 14 from the ACC computing power/consumed electricity setup determination unit 120. The ACC computing power/consumed electricity setting unit 130 applies, as an output, the setup information to the accelerator 12 and the cooling mechanism 14.

In step S17, the accelerator 12 executes computing specialized for specific processing. In step S18, the accelerator computing circuit and program 12a loads the accelerator circuit or the program and ends processing of the present flowchart. The FPGA circuit information is used when the accelerator 12 is an FPGA, and the GPU is used when the accelerator 12 is a GPU.

At the same time, in step S19, the cooling mechanism 14 cools the entire computing device [the CPU 11 and the accelerator 12] of the server and ends processing of the present flowchart.

### [Operation Sequence 2]

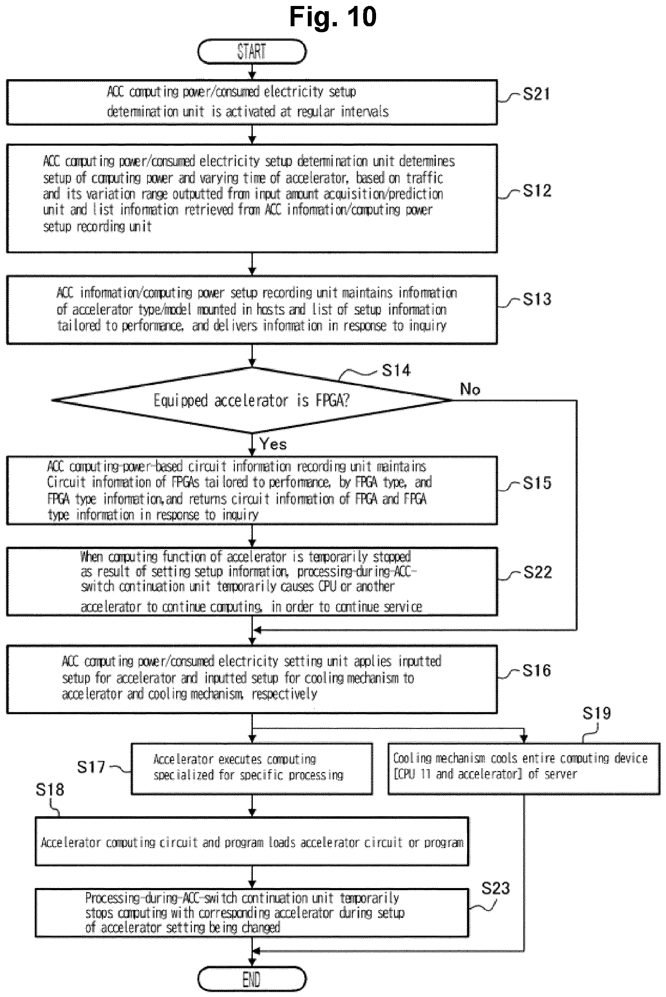

Fig. 10 is a flowchart of <Operation Sequence 2> in a case where the electricity saving control starts with periodic activation. Steps in which the same processing are executed as those in the flow of <Operation Sequence 1> in Fig. 9 are denoted by the same reference numerals, and descriptions thereof are skipped. In step S21, the ACC computing power/consumed electricity setup determination unit 120 is activated at regular intervals, and determines the accelerator setup tailored to computing power and varying time of the accelerator 12, based on results of predicting the traffic and the assumed variation range inputted from the input amount acquisition/prediction unit 110.

In step S22 after step S15, when the computing function of the accelerator 12 is temporarily stopped as a result of setting the setup information, the processing-during-ACC-switch continuation unit 160 temporarily causes the CPU 11 or another accelerator to continue computing, in order to continue the service. Accordingly, this is enabled when computing with the corresponding accelerator 12 is temporarily stopped during the setup of the accelerator 12 being changed.

In step S23 after step S18, the processing-during-ACC-switch continuation unit 160 temporarily stops computing with the corresponding accelerator during the setup of the accelerator setting being changed, and ends processing of the present flowchart. Hereinabove, <Operation Sequence 1> in a case where the electricity saving control starts with Function 1 of predicting the input amount and <Operation Sequence 2> in a case where the electricity saving control starts with periodic activation have been described.

### [Sequence of Setting Means of Reducing Electricity]

The accelerator state control device 100 selects a means of reducing electricity to be applied, based on the traffic and the range of time in variation. A description is given of example means of reducing electricity and example load patterns suitable for the means of reducing electricity.

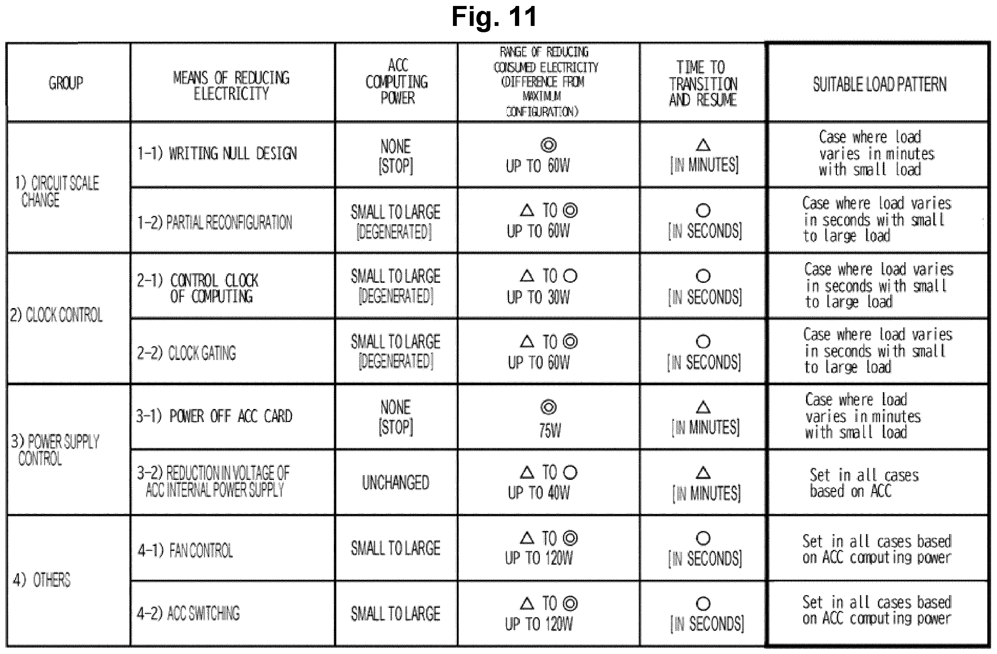

Fig. 11 shows a table of listing detailed information on means of reducing electricity. As illustrated in Fig. 11, the four groups are each described with means of reducing electricity, ACC computing power, range of reducing consumed electricity (difference from maximum configuration), time to transition and resume, and suitable load pattern. The above-described four groups are 1) circuit scale change, 2) clock control, 3) power supply control, and 4) others. The range of reducing consumed electricity is a calculated value based on a specific configuration (for example, Dell R740 2 socket + FPGA N3000). For example, when the group is "1) circuit scale change" and the means of reducing electricity is "1-1) writing null design", the suitable load pattern is a "case where load varies in minutes with small load". In other words, when "load is small and varies in minutes" is acceptable, it is suitable to adopt "1-1) writing null design". Especially, when the group is "4) others" and the means of reducing electricity is "4-2) ACC switching", the suitable load pattern corresponds to "load is set in all cases based on ACC computing power".

### [Example Sequence of Setting Means of Reducing Electricity]

A description is given of an example of setting the accelerator 12 and the cooling mechanism 14 (Fan and/or the like) and a logic of determining the setting, with reference to a flowchart. The set amount is merely an example and may be changed according to each setting item.

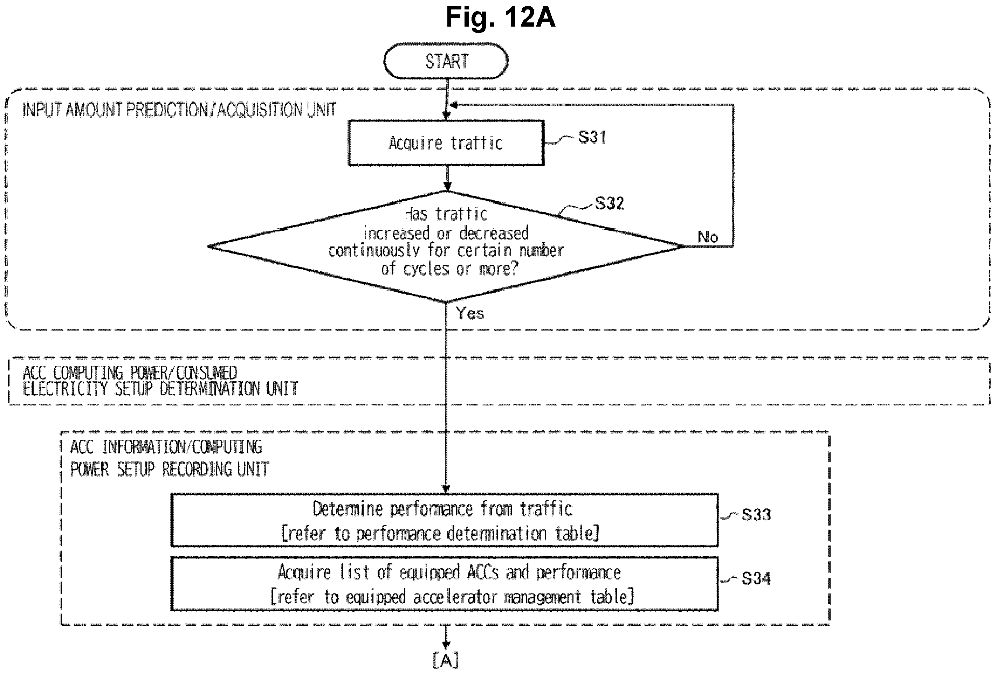

Figs. 12A to 12C are flowcharts of an example sequence of setting a means of reducing electricity. Note that Figs. 12A to 12C show a single flow, but are presented as being connected using [A], [B], and [C] as connectors for the purpose of illustration. In addition, broken lines enclosing steps of the flow indicate functional units that execute the steps.

As illustrated in Fig. 12A, in step S31, the ACC computing power/consumed electricity setup determination unit 120 acquires the traffic. In step S32, the ACC computing power/consumed electricity setup determination unit 120 determines whether the traffic has increased or decreased continuously for a certain number of cycles or more. If the traffic has not increased nor decreased continuously for a certain number of cycles or more (S32: No), the processing returns to step S31.

If the traffic amount has increased or decreased continuously for a certain number of cycles or more (S32: Yes), the processing skips over the ACC computing power/consumed electricity setup determination unit 120 and proceeds to step S33. In step S33, the ACC information/computing power setup recording unit 150 determines performance from the traffic with reference to the performance determination table illustrated in Fig. 5. In step S34, the ACC information/computing power setup recording unit 150 refers to the equipped accelerator management table illustrated in Fig. 6 to acquire a list of equipped ACCs and the performance.

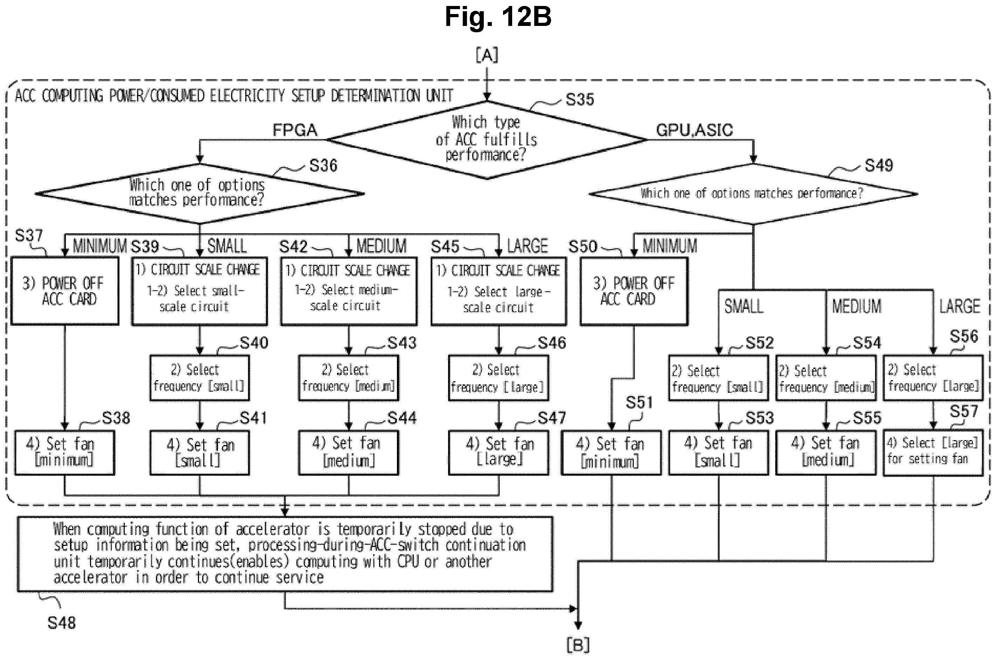

Steps enclosed by a broken line in Fig. 12B are executed by the ACC computing power/consumed electricity setup determination unit 120. In step S35, the ACC computing power/consumed electricity setup determination unit 120 determines the type of ACC to fulfill the performance. When the ACC fulfilling the performance is an FPGA, it is determined in step S36 which one of following options the performance matches.

When the performance is "minimum", "3-1) Power off ACC card under 3) Power supply control" (Fig. 11) is selected in step S37, "Fan setting [minimum] with 4-1) Fan control under 4) Others" (Fig. 11) is selected in step S38, and the processing proceeds to step S48.

When the performance is "small", "Selecting small-scale circuit with 1-2) Partial reconfiguration under 1) Circuit scale change" (Fig. 11) is selected in step S39, "Frequency [small] with 2-1) Control clock of computing unit under 2) Clock control" (Fig. 11) is selected in step S40, "Fan setting [small] with 4-1) Fan control under 4) Others" (Fig. 11) is selected in step S41, and the processing proceeds to step S48.

When the performance is "medium", "Selecting medium-scale circuit with 1-2) Partial reconfiguration under 1) Circuit scale change" (Fig. 3) is selected in step S42, "Frequency [medium] with 2-1) Control clock of computing unit under 2) Clock control" (Fig. 11) is selected in step S43, "Fan setting [medium] with 4-1) Fan control under 4) Others" (Fig. 11) is selected in step S44, and the processing proceeds to step S48.

When the performance is "large", "Selecting large-scale circuit with 1-2) Partial reconfiguration under 1) Circuit scale change" (Fig. 3) is selected in step S45, "Frequency [large] with 2-1) Control clock of computing unit under 2) Clock control" (Fig. 11) is selected in step S46, "Fan setting [large] with 4-1) Fan control under 4) Others" (Fig. 11) is selected in step S47, and the processing proceeds to step S48.

In step S48, when the computing function of the accelerator 12 is temporarily stopped due to the setup information being set, the processing-during-ACC-switch continuation unit 160 temporarily continues (enables) computing with the CPU 11 or another accelerator in order to continue the service, and proceeds to step S58. This is enabled when the computing with the corresponding accelerator is temporarily stopped during the setup of the accelerator is being changed.

In a case where the ACC fulfilling the performance is determined to be the GPU or the ASIC in step S35, the ACC computing power/consumed electricity setup determination unit 120 determines in step S49 which one of following options the performance matches.

When the performance is "minimum", "3-1) Power off ACC card under 3) Power supply control" (Fig. 11) is selected in step S50, "Fan setting [minimum] with 4-1) Fan control under 4) Others" (Fig. 11) is selected in step S51, and the processing proceeds to step S58.

When the performance is "small", "Frequency [small] with 2-1) Control clock of computing unit under 2) Clock control" (Fig. 11) is selected in step S52, "Fan setting [small] with 4-1) Fan control under 4) Others" (Fig. 11) is selected in step S53, and the processing proceeds to step S58.

When the performance is "medium", "Frequency [medium] with 2-1) Control clock of computing unit under 2) Clock control" (Fig. 11) is selected in step S54, "Fan setting [medium] with 4-1) Fan control under 4) Others" (Fig. 3) is selected in step S55, and the processing proceeds to step S58.

When the performance is "large", "Frequency [large] with 2-1) Control clock of computing unit under 2) Clock control" (Fig. 3) is selected in step S56, "Fan setting [large] with 4-1) Fan control under 4) Others" (Fig. 3) is selected in step S57, and the processing proceeds to step S58.

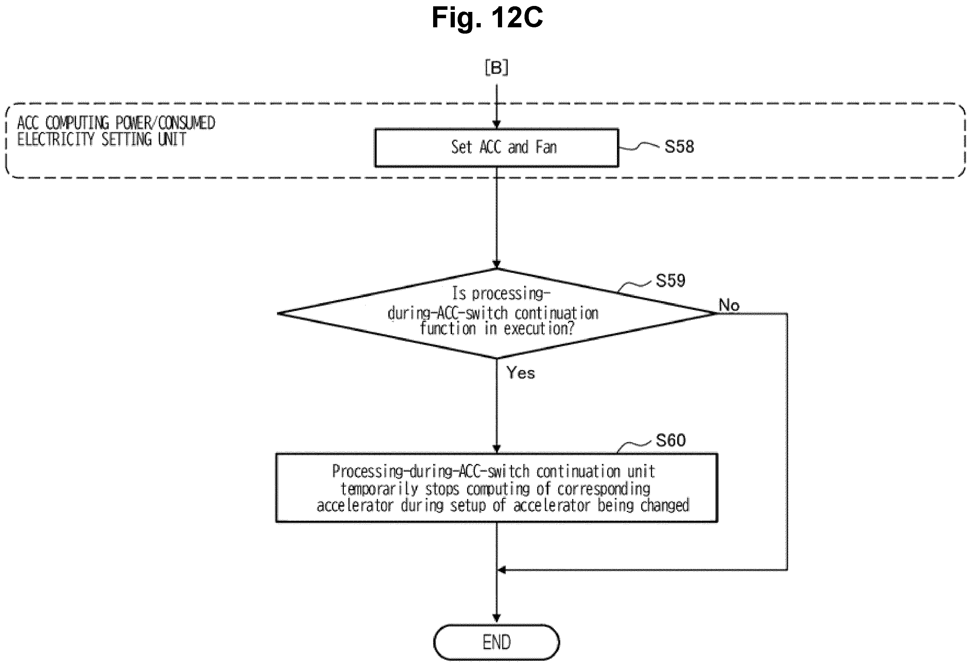

In step S58 illustrated in Fig. 12C, the ACC computing power/consumed electricity setting unit 130 sets the ACC and the Fan.

In step S59, the processing-during-ACC-switch continuation unit 160 determines whether a processing-during-ACC-switch continuation function is in execution. When the processing-during-ACC-switch continuation function is not in execution (S59: No), the processing of the present flow ends. When the processing-during-ACC-switch continuation function is in execution (S59: Yes), in step S60, the processing-during-ACC-switch continuation unit 160 executes disablement of temporarily stopping computing of the corresponding accelerator during the setup of the accelerator being changed, and ends the processing of the present flow. The sequence of setting a means of reducing electricity has been described above with reference to Figs. 11 and 12A to 12C.

### [Data Processing Sequence of Operation Sequence 1]

A data processing sequence of Operation Sequence 1 is described. The same applies to the data processing sequence of Operation Sequence 2. The data processing sequence of Operation Sequence 1 includes "Look-Aside type (the CPU actively offloads the processing data for the ACC to the ACC)" and "In-line type (the CPU actively offloads the processing data of the ACC to the ACC)". Hereinafter, these are described in sequence below.

Fig. 13 is a flowchart of a data processing sequence of Look-Aside type Operation Sequence 1. In step S61, the antenna device data input/output unit 211 sends a signal generated by the antenna device 210 to the server 200.

In step S62, the input/output unit 13 inputs/outputs data to/from the external device [the antenna device 210 and/or the subsequent-stage processing device 220].

In step S63, the application 1 runs on the CPU 11 to process signals. The application 1 offloads specialized computing that is not suitable for the CPU 11, such as some parallel computing, to the accelerator 12.

In step S64, the accelerator 12 executes computing specialized for specific processing. In step S65, the application 1 receives data to be processed from the input/output unit 13 and passes the computed data to the input/output unit 13. When the corresponding accelerator 12 is temporarily unusable during the setup of the accelerator 12 being changed, offloading for the application 1 is managed by the processing-during-ACC-switch continuation unit 160.

In step S66, the input/output unit 13 inputs/outputs data to/from the external device [the antenna device 210 and/or the subsequent-stage processing device 220].

In step S67, the subsequent-stage processing device data input/output unit 221 receives results of processing signals with the server 200, and ends the processing of the present flowchart.

Fig. 14 is a flowchart of a data processing sequence of In-Line type Operation Sequence **1.** In step S71, the antenna device data input/output unit 211 sends signals generated by the antenna device 210 to the server 200.

In step S72, the input/output unit 13 inputs/outputs data to/from the external device [the antenna device 210 and/or the subsequent-stage processing device 220].

In step S73, the accelerator 12 executes computing specialized for specific processing. In step S74, the application 1 receives the data to be processed from the input/output unit 13 and passes the computed data to the input/output unit 13. When the corresponding accelerator 12 is temporarily unusable during the setup of the accelerator 12 being changed, offloading for the application 1 is handled by the processing-during-ACC-switch continuation unit 160.

In step S75, the input/output unit 13 inputs/outputs data to/from the external device [the antenna device 210 and/or the subsequent-stage processing device 220].

In step S76, the subsequent-stage processing device data input/output unit 221 receives results of processing signals with the server 200, and ends the processing of the present flowchart.

### [Computing Power and Consumed Electricity, and Redundancy]

A description is given of computing power and consumed electricity, and redundancy implemented achieved by the accelerator state control device 100. The ACC computing power/consumed electricity setup determination unit 120 determines the accelerator setup tailored to computing power and varying time of the accelerator, based on the predicted results of the traffic and the assumed variation range inputted from the input amount acquisition/prediction unit 110. The ACC computing power/consumed electricity setting unit 130 receives the setup for the accelerator 12 and the setup information for the cooling mechanism 14 from the ACC computing power/consumed electricity setup determination unit 120, and applies the setup information to the accelerator 12 and the cooling mechanism 14, respectively. The ACC computing power/consumed electricity setting unit 130 automatically executes accelerator setting (such as circuit information, frequency, and Fan output) suitable for input data amount, to dynamically change computing power and consumed electricity.

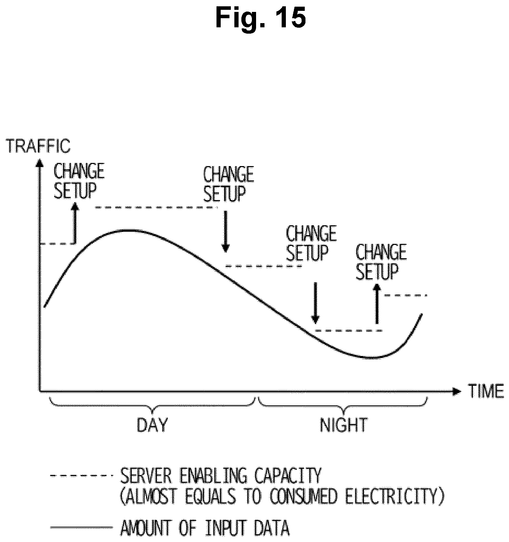

Fig. 15 is a chart illustrating computing power and consumed electricity, and redundancy achieved by the accelerator state control device 100. A solid line in Fig. 15 indicates amount of input data, and broken lines in Fig. 15 indicates server enabling capacity (almost equals to consumed electricity). The ACC computing power/consumed electricity setup determination unit 120 and the ACC computing power/consumed electricity setting unit 130 execute accelerator setting suitable for amount of input data, to dynamically change computing power and consumed electricity. As indicated by arrowed lines in Fig. 15, changing setup causes the capacity of the server 200 to vary, to improve electricity efficiency.

### [Hardware Configuration]

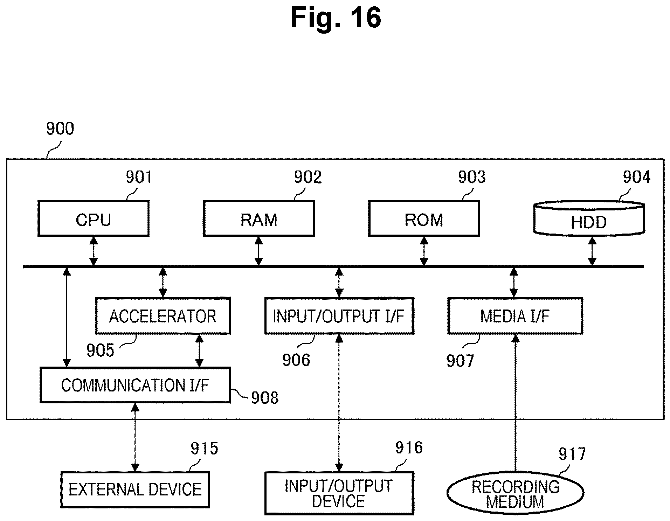

The accelerator state control device 100 or 100A (Fig. 1 or 2) of the accelerator state control system 1000 or 1000A (Figs. 1 or 2) according to the above-described embodiment is implemented by a computer 900 having a configuration as illustrated in Fig. 16, for example. Fig. 16 shows a hardware configuration of an example of the computer 900 to implement the functions of the accelerator state control device 100. The accelerator state control device 100 includes a CPU 901, a RAM 902, a ROM 903, an HDD 904, an accelerator 905, an input/output interface (I/F) 906, a media interface (I/F) 907, and a communication interface (I/F) 908. The accelerator 905 corresponds to the accelerator 12 in Figs. 1 and 2.

The accelerator 905 is an accelerator (device) 12 (Figs. 1 and 2) that processes at least one of data from the communication I/F 908 and data from the RAM 902 at high speed. Note that the accelerator 905 may be of a type (Look-Aside type) that executes processing from the CPU 901 or the RAM 902 and then returns the execution result to the CPU 901 or the RAM 902. Alternatively, the accelerator 905 may be of a type (In-line type) that is interposed between the communication I/F 908 and the CPU 901 or RAM 902 for the processing.

The accelerator 905 is connected with an external device 915 via the communication I/F 908. The input/output I/F 906 is connected with an input/output device 916. The media I/F 907 reads and writes data from and to a recording medium 917.

The CPU 901 operates on the basis of a program stored in the ROM 903 or the HDD 904 and executes the program (application or also referred to as an App as an abbreviation thereof) loaded into the RAM 902 to control the units of the accelerator state control devices 100 and 100A illustrated in Figs. 1 and **2****.** The program may be distributed via a communication line or recorded in the recording medium 917, such as a CD-ROM, for distribution. The ROM 903 stores a boot program to be executed by the CPU 901 when the computer 900 is activated, one or more programs depending on hardware of the computer 900, and the like.

The CPU 901 controls the input/output device 916 including an input unit such as a mouse and a keyboard and an output unit such as a display and a printer, via the input/output I/F 906. The CPU 901 acquires data from the input/output device 916 and outputs generated data to the input/output device 916, via the input/output I/F 906. Note that a graphics processing unit (GPU) or the like may be used as a processor in conjunction with the CPU 901.

The HDD 904 stores one or more programs to be executed by the CPU 901, data to be used by the one or more programs, and the like. The communication I/F 908 receives data from another device via a communication network (e.g., network (NW)) and outputs the data to the CPU 901 and also transmits data generated by the CPU 901 to said another device via the communication network.

The media I/F 907 retrieves a program or data stored in the recording medium 917 and outputs the program or data to the CPU 901 via the RAM 902. The CPU 901 loads a program of desired processing from the recording medium 917 to the RAM 902 via the media I/F 907 and executes the loaded program. The recording medium 917 is an optical recording medium such as a digital versatile disc (DVD) and a phase change rewritable disk (PD), a magneto-optical recording medium such as a magneto optical disk (MO), a magnetic recording medium, a conductor memory tape medium, semiconductor memory, and/or the like.

For example, in a case where the computer 900 functions as the accelerator state control device 100 (Fig. 1) configured to be a device according to the present embodiment, the CPU 901 of the computer 900 executes one or more programs loaded in the RAM 902 to implement the functions of the accelerator state control device 100. In addition, data in the RAM 902 is stored into the HDD 904. The CPU 901 retrieves the program of desired processing from the recording medium 917 and executes the program. Additionally, the CPU 901 may retrieve the program of desired processing from another device via the communication network. Note that when the controller function unit is installed outside the server 200, as in Fig. 2, the accelerator state control device 100A is similarly implemented by the computer 900 having the configuration illustrated in Fig. 16.

### [Advantageous Effects]

As described above, the accelerator state control device 100 to control states of the accelerator when specific processing of the application 1 is offloaded to, and computed by, the accelerator 12 includes: the input amount acquisition/prediction unit 110 that predicts amount of processing to be offloaded to the accelerator 12 and outputs a prediction result as a traffic and a variation range of the traffic; the computing power setup recording unit 150 that maintains information on a type and a model of the accelerator and setup information tailored to performance as a list, and retrieves information from the list in response to an inquiry and responds to the inquiry; the ACC computing power/consumed electricity setup determination unit 120 that determines setup information on computing power and varying time of the accelerator, based on the traffic and the variation range outputted from the input amount acquisition/prediction unit 110 and the list retrieved from the computing power setup recording unit 150; and the ACC computing power/consumed electricity setting unit 130 that applies the setup information to the accelerator 12, based on the setup information for the accelerator 12 determined by the ACC computing power/consumed electricity setup determination unit 120.

In this way, automatically executing accelerator setup (circuit information, frequency, Fan power, and the like) suitable for amount of input data allows for dynamically changing computing power and consumed electricity, to achieve high electricity efficiency of various accelerators, according to a varying amount of input data, while securing responsiveness. This achieves both <Requirement 1: Electricity efficiency> and <Requirement 2: Responsiveness>.

The accelerator state control devices 100 and 100A (Figs. 1 and 2) each include the processing-during-ACC-switch continuation unit 160 that temporarily continues the processing by the CPU 11 or another accelerator when the computing function of the accelerator 12 is temporarily stopped due to the ACC computing power/consumed electricity setting unit 130 setting the setup information.

In this way, when the accelerator has stopped its computing during being set, the CPU 11 or another accelerator continues computing, to maintain availability.

In each of the accelerator state control devices 100 and 100A (Figs. 1 and 2), the accelerator 12 may include an FPGA, and the accelerator state control devices 100 and 100A each include the ACC computing-power-based circuit information recording unit 140 that maintains circuit information of the FPGA tailored to performance, by FPGA type, and the FPGA type information and returns the circuit information of the FPGA and the FPGA type information in response to an inquiry, wherein the ACC computing-power-based circuit information recording unit 140 responds to the ACC computing power/consumed electricity setup determination unit 120 via the ACC information/computing power setup recording unit 150 or directly, and the ACC computing power/consumed electricity setup determination unit 120 determines setup information for the accelerator tailored to the computing power of the accelerator and varying time, based on the FPGA circuit information and the FPGA type information from the ACC computing-power-based circuit information recording unit 140.

In this way, the ACC computing-power-based circuit information recording unit 140 records and manages the setup for saving electricity for each accelerator type. The ACC computing power/consumed electricity setup determination unit 120 selects a processing means for each equipped ACC information, to achieve supporting various accelerators (<Requirement 3: Supporting various accelerators>). For example, the circuit is selected and frequency is set for the FPGA, and the frequency is set for the ASIC.

In each of the accelerator state control devices 100 and 100A (Figs. 1 and 2), the accelerator 12 may include an FPGA and a GPU, and the ACC computing power/consumed electricity setting unit 130 applies the setup information commonly to every type of accelerator through changing the frequency and/or turning off the electric source, and applies the setup information through rewriting the circuit to the FPGA and through sleeping to the GPU.

In this way, when the setup for saving electricity is determined, settable parameters are determined for each equipped accelerator, to achieve supporting various accelerators (<Requirement 3: Supporting various accelerators>). For example, the circuit is rewritten for the FPGA, sleeping is executed for the GPU, and frequency is changed and the electric source is turned off as a common means.

The accelerator state control systems 1000 and 1000A (Figs. 1 and 2) including the accelerator state control devices 100 and 100A (Figs. 1 and 2) that control states of the accelerator when specific processing of the application 1 is offloaded to, and computed by, the accelerator 12, and the cooling mechanism 14 that cools the computing device including the accelerator, wherein the accelerator state control systems 1000 and 1000A each includes: the input amount acquisition/prediction unit 110 that predicts amount of processing to be offloaded to the accelerator 12 and outputs a prediction result as a traffic and a variation range of the traffic; the computing power setup recording unit 150 that maintains information on a type and a model of the accelerator and setup information tailored to performance as a list, and retrieves information from the list in response to an inquiry and responds to the inquiry; the ACC computing power/consumed electricity setup determination unit 120 that determines setup information on computing power and varying time of the accelerator, based on the traffic and the variation range outputted from the input amount acquisition/prediction unit 110 and the list retrieved from the computing power setup recording unit 150; and the ACC computing power/consumed electricity setting unit 130 that applies the setup information to the accelerator 12 and the cooling mechanism 14, based on the setup information for the accelerator 12 and the cooling mechanism 14 determined by the ACC computing power/consumed electricity setup determination unit 120.

This achieves high electricity efficiency of various accelerators (<Requirement 1: Electricity efficiency>) according to a varying amount of input data, while securing responsiveness (<Requirement 2: Responsiveness>). In addition, when the setup for saving electricity is determined, settable parameters are determined for each equipped accelerator, to achieve supporting various accelerators (<Requirement 3: Supporting various accelerators>). For example, the circuit is rewritten for the FPGA, sleeping is executed for the GPU, and frequency is changed and the electric source is turned off as a common means. In addition, the cooling mechanism 14 is set to have power tailored to the accelerators and the traffic.

In addition, all or part of the processing described as automatically executed in the above-mentioned embodiments and modifications, can be manually executed, or all or part of the processing described as manually executed can be automatically executed with a known means. Additionally, processing procedures, control procedures, specific names, and information including various types of data and parameters illustrated herein and the drawings can be changed as desired, unless otherwise specified. In addition, the components of the devices illustrated in the drawings are functionally conceptual, and are not required to be physically designed as illustrated. In other words, specific forms of separation/integration of the devices are not limited to those illustrated in the drawings, and all or part thereof can be functionally or physically separated/integrated by any desired unit, in accordance with various kinds of loads, usage conditions, and the like.

In addition, some or all of the components, functions, processing units, processing means, and the like described above may be implemented by hardware, such as being designed with an integrated circuit. In addition, the components, functions, and the like may be implemented by software for one or more processors interpreting and executing one or more programs to implement the functions. Information such as a program, a table, and a file for implementing the functions can be stored in a recording device such as a memory, a hard disk, and a solid state drive (SSD), or in a recording medium such as an integrated circuit (IC) card, a secure digital (SD) card, and an optical disc.

### Reference Signs List

1 Application (APL)
10 Hardware
11 CPU
12 Accelerator
12a Accelerator computing circuit and program
13 Input/output unit
14 Cooling mechanism
20 Software
100, 100A Accelerator state control device
110 Input amount acquisition/prediction unit (prediction unit, prediction procedure)
120 ACC computing power/consumed electricity setup determination unit (determination unit, determination procedure)
130 ACC computing power/consumed electricity setting unit (setting unit, setting procedure)
140 ACC computing-power-based circuit information recording unit
150 ACC information/computing power setup recording unit (computing power setup recording unit, computing power setup recording procedure)
160 processing-during-ACC-switch continuation unit (processing continuation unit)
170 List
200 Server (accelerator-equipped server)
210 Antenna device
220 Subsequent-stage processing device
1000, 1000A Accelerator state control system

## Claims

1. An accelerator state control device to control states of an accelerator when specific processing of an application is offloaded to, and computed by, the accelerator, the device comprising:
a prediction unit that predicts amount of processing to be offloaded to the accelerator and outputs a prediction result as a traffic and a variation range of the traffic;
a computing power setup recording unit that maintains information on a type and a model of the accelerator and setup information tailored to performance as a list, and retrieves information from the list in response to an inquiry and responds to the inquiry;
a determination unit that determines setup information on computing power and varying time of the accelerator, based on the traffic and the variation range outputted from the prediction unit as well as the list retrieved from the computing power setup recording unit; and
a setting unit that applies the setup information to the accelerator, based on the setup information for the accelerator determined by the determination unit.

2. The accelerator state control device according to claim 1, comprising:
a processing continuation unit that temporarily continues processing by a central processing unit (CPU) or another accelerator when a computing function of the accelerator is temporarily stopped due to the setting unit setting the setup information.

3. The accelerator state control device according to claim 1, wherein
the accelerator includes a field programmable gate array (FPGA), and
the accelerator state control device comprises:
a circuit information recording unit that maintains circuit information of the FPGA tailored to performance, by FPGA type, and FPGA type information and returns the circuit information of the FPGA and the FPGA type information in response to an inquiry,
the circuit information recording unit responds to the determination unit via the computing power setup recording unit or directly, and
the determination unit determines setup information tailored to computing power of the accelerator and varying time, based on the circuit information of the FPGA and the FPGA type information from the circuit information recording unit.

4. The accelerator state control device according to claim 1, wherein
the accelerator includes a field programmable gate array (FPGA) and a graphics processing unit (GPU), and
the setting unit
applies the setup information commonly to every type of the accelerator through changing a frequency and/or turning off an electric source, and
applies the setup information through rewriting a circuit to the FPGA and through sleeping to the GPU.

5. An accelerator state control system comprising an accelerator state control device that controls states of an accelerator when specific processing of an application is offloaded to, and computed by, the accelerator, and a cooling mechanism that cools a computing device including the accelerator, the system comprising:
a prediction unit that predicts amount of processing to be offloaded to the accelerator and outputs a prediction result as a traffic and a variation range of the traffic;
a computing power setup recording unit that maintains information on a type and a model of the accelerator, setup information tailored to performance, and setup information of the cooling mechanism as a list and retrieves information from the list in response to an inquiry and responds to the inquiry;
a determination unit that determines setup information on computing power and varying time of the accelerator, based on the traffic and the variation range outputted from the prediction unit and the list retrieved from the computing power setup recording unit; and
a setting unit that applies the setup information to the accelerator and the cooling mechanism, based on the setup information for the accelerator and the cooling mechanism determined by the determination unit.

6. An accelerator state control method of an accelerator state control device that controls states of an accelerator when specific processing of an application is offloaded to, and computed by, the accelerator,
wherein
the accelerator state control device executes:
a step of predicting amount of processing to be offloaded to the accelerator and outputting a prediction result as a traffic and a variation range of the traffic;
a step of maintaining information on a type and a model of the accelerator and setup information tailored to performance, as a list, and retrieving information from the list in response to an inquiry and responding to the inquiry;
a step of determining setup information on computing power of the accelerator and varying time, based on the traffic and the variation range as well as the list; and
a step of applying the setup information to the accelerator, based on the setup information for the accelerator.

7. An accelerator state control method of an accelerator state control system comprising an accelerator state control device that controls states of an accelerator when specific processing of an application is offloaded to, and computed by, the accelerator, and a cooling mechanism that cools a computing device including the accelerator,
wherein
the accelerator state control device executes:
a step of predicting amount of processing to be offloaded to the accelerator and outputting a prediction result as a traffic and a variation range of the traffic;
a step of maintaining information on a type and a model of the accelerator, setup information tailored to performance, and setup information of the cooling mechanism, as a list, and retrieving information from the list in response to an inquiry and responding to the inquiry;
a step of determining setup information on computing power of the accelerator and varying time, based on the traffic and the variation range as well as the list; and
a step of applying the setup information to the accelerator and the cooling mechanism, based on the setup information for the accelerator and the cooling mechanism.

8. A program for causing a computer to function as an accelerator state control device that controls states of an accelerator when specific processing of an application is offloaded to, and computed by, the accelerator, the program comprising:
a prediction procedure of predicting amount of processing to be offloaded to the accelerator and outputting a prediction result as a traffic and a variation range of the traffic;
a computing power setup recording procedure of maintaining information on a type and a model of the accelerator and setup information tailored to performance, as a list, and retrieving information from the list in response to an inquiry and responding to the inquiry;
a determination procedure of determining setup information on computing power of the accelerator and varying time, based on the traffic and the variation range outputted from the prediction procedure and the list retrieved from the computing power setup recording procedure; and
a setting procedure of applying the setup information to the accelerator, based on the setup information for the accelerator determined by the determination procedure.
